# EUROPEAN PATENT APPLICATION

(11) **EP 2 190 169 A1**
(43) Date of publication of application: **26.05.2010**
(21) Application number: 09173274.3
(22) Date of filing: 16.10.2009
(51) Int. Cl.: H04L 29/08, H04W 4/02, H04L 12/18

(54) **Personal broadcast service transmitter and mobile terminal**

(30) Priority: 24.11.2008 KR 20080117069
(71) Applicant: Electronics and Telecommunications Research Institute, Daejeon-si 305-700 (KR)
(72) Inventor: Shin, Dong-jin, Daejeon-si (KR); Cho, Jai-hyung, Daejeon-si (KR); Lee, Sang-ho, Daejeon-si (KR); Kim, Yeong-jin, Daejeon-si (KR)
(74) Representative: Betten & Resch

(57) **Abstract**

A personal broadcast service transmitter and a mobile terminal are provided. The mobile terminal receiving a personal broadcast service includes a location information transmitter to transmit location information of the mobile terminal to a personal broadcast service transmitter transmitting the personal broadcast service over a mobile communication network; and a personal broadcast service receiver to receive from the personal broadcast service transmitter the personal broadcast service generated based on the location information of the mobile terminal.

## Description

### CROSS-REFERENCE TO RELATED APPLICATION

This application claims the benefit under 35 U.S.C. §119(a) of Korean Patent Application No. 10-2008-0117069, filed on November 24, 2008, the disclosure of which is incorporated by reference in its entirety for all purposes.

### BACKGROUND

### 1. Field

The following description relates to a broadcast communication technology and, more particularly, to a personal broadcast service technology.

### 2. Description of the Related Art

Mobile data communication services through mobile terminals have recently been increasing. The mobile terminal has enhanced multimedia capabilities with a television function or a digital broadcast receiver. Accordingly, broadcast services are expected to be provided through mobile terminals.

On the other hand, server and network environments have been developed so that individuals or private entities rather than existing public broadcast entities may generate customized content using a variety of tools and broadcast the content to specified receivers or general individuals.

Existing personal broadcast includes an interactive broadcast service and a non-interactive broadcast service. For the non-interactive broadcast service, a personal broadcast receiver uses a personal computer with wired or wireless Internet capabilities to access a personal broadcast server and receives personal broadcast services. For the interactive broadcast service, a personal broadcast receiver and a content provider are interactive with each other so that the receiver may receive his or her desired content from the content provider.

However, the existing personal broadcast service is primarily provided for the benefit of the personal broadcast content provider and the personal broadcast service provider. As a result, it is difficult for the personal broadcast service receiver to obtain his or her desired content from the personal broadcast service.

### SUMMARY

The following description relates to a mobile terminal and a personal broadcast service transmitter which transmits customized location-based personal broadcast services.

In one general aspect, a mobile terminal receiving a personal broadcast service includes a location information transmitter to transmit location information of the mobile terminal to a personal broadcast service transmitter transmitting the personal broadcast service over a mobile communication network; and a personal broadcast service receiver to receive from the personal broadcast service transmitter the personal broadcast service generated based on the location information of the mobile terminal.

In another general aspect, a personal broadcast service transmitter includes a terminal location information receiver to receive, over a mobile communication network, location information of a mobile terminal which has requested a personal broadcast service; and a personal broadcast service provider to generate a personal broadcast service based on the location information of the mobile terminal and provide the personal broadcast service to the mobile terminal.

However, other features and aspects will be apparent from the following description, the drawings, and the claims.

### BRIEF DESCRIPTION OF THE DRAWINGS

FIG. 1 is a diagram illustrating an exemplary personal broadcast service system.
FIG. 2 is a diagram illustrating an exemplary mobile terminal.
FIG. 3 is a diagram illustrating an exemplary personal broadcast service transmitter.
FIG. 4 is a flow chart of an exemplary personal broadcast service process.
FIG. 5 is a flow chart of an exemplary personal broadcast multicast process.
FIGS. 6 to 9 are diagrams illustrating exemplary personal broadcast services.

Throughout the drawings and the detailed description, unless otherwise described, the same drawing reference numbers refer to the same elements, features, and structures. The relative size and depiction of these elements may be exaggerated for clarity, illustration, and convenience.

### DETAILED DESCRIPTION

The detailed description is provided to assist the reader in gaining a comprehensive understanding of the methods, apparatuses and/or systems described herein. Accordingly, various changes, modifications, and equivalents of the systems, apparatuses, and/or methods described herein will be suggested to those of ordinary skill in the art. Also, descriptions of well-known functions and constructions are omitted to increase clarity and conciseness.

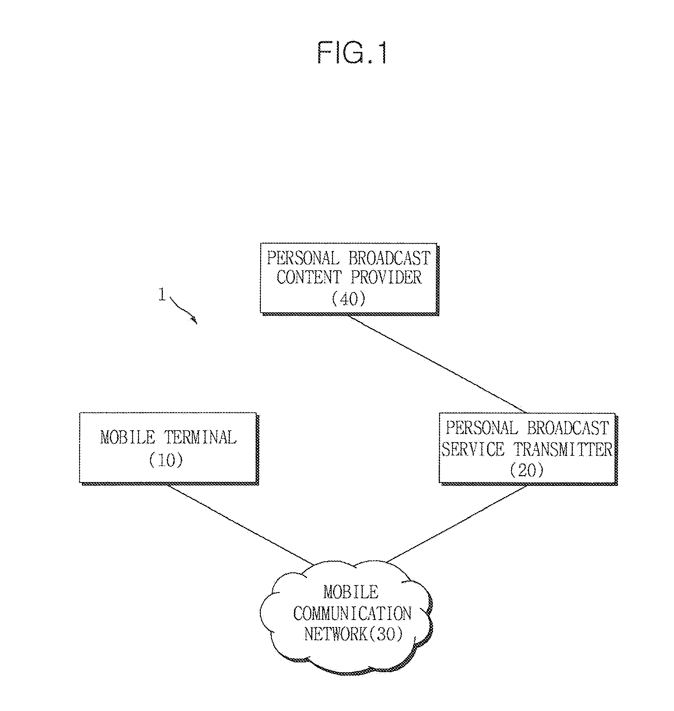

FIG. 1 is a diagram illustrating an exemplary personal broadcast service system 1.

Referring to FIG. 1, the personal broadcast service system 1 includes a mobile terminal 10, a personal broadcast service transmitter 20, a mobile communication network 30, and a personal broadcast content provider 40. The personal broadcast service transmitter 20 transmits a personal broadcast service based on a location of the mobile terminal 10 which has requested the personal broadcast service. The mobile terminal 10 sends its location information to the personal broadcast service transmitter 20 over the mobile communication network 30.

In one example, the mobile terminal 10 may receive personal broadcast services which are customized to suit service receive's needs. In other words, personal broadcast services are provided to suit the needs of service receivers rather than of personal broadcast content providers or personal broadcast service providers. The personal broadcast service transmitter 20 and the personal broadcast content provider 40 may be operatively connected with the mobile communication network 30 for the mobile terminal 10 to conveniently receive location-based personal broadcast services.

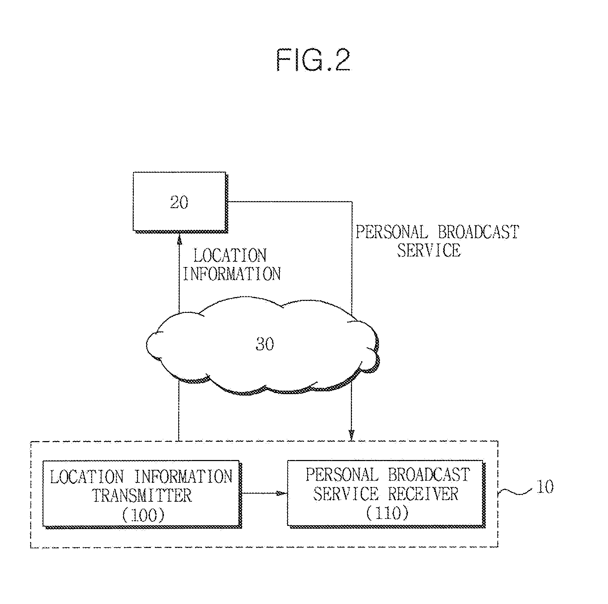

Examples of the mobile terminal 10 include, but not limited to, cellular phones, personal digital assistant (PDAs), hand personal computers (HPCs), web pads, notebooks, smart phones, wireless application protocol (WAP) phones, palm PCs, e-Book terminals, hand-held terminals (HHTs), and any other communication equipment receiving personal broadcast services. The mobile terminal 10 exchanges information with the mobile communication network 30 so that the mobile communication network 30 may detect a location of the mobile terminal 10. The mobile terminal 10 further displays multimedia content, including images or voice, on its display. The configuration of the mobile terminal 10 will be described in detail with reference to FIG. 2.

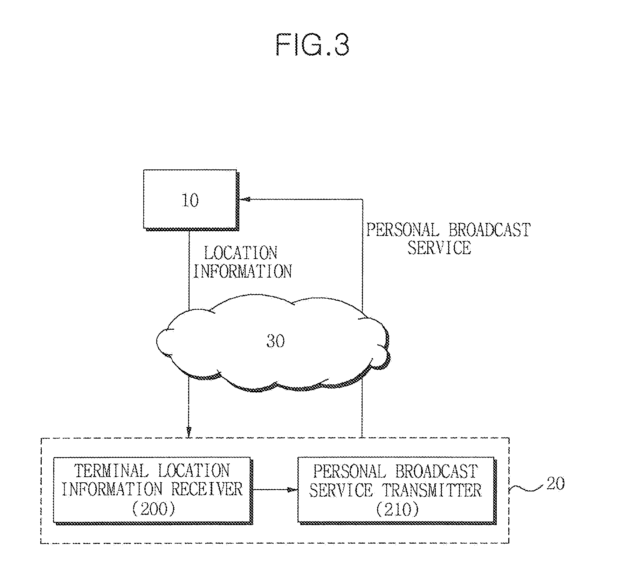

The personal broadcast service transmitter 20 receives personal broadcast content from the personal broadcast content provider 40. The personal broadcast service transmitter 20 further receives location information of the mobile terminal 10 over the mobile communication network 30. The personal broadcast service transmitter 20 then sends a customized personal broadcast service to the mobile terminal 10 based on the location information. The configuration of the personal broadcast service transmitter 20 will be described in detail with reference to FIG. 3.

The mobile communication network 30 may be divided into an access network and a core network. In this case, the access network controls wireless access or wireless transmission of the mobile terminal 10, while the core network controls the access network and manages location information of the mobile terminal 10. The mobile communication network 30 may be a typical second or third generation (2G or 3G) mobile communication network or a WiBro network. Multicast and broadcast functions may be provided on the access and core networks depending on the type of mobile communication network 30 or may be distributed. Management of the location information of the mobile terminal 10 may be implemented according to the mechanism of mobile communication systems which are now in use or has been standardized.

FIG. 2 is a diagram illustrating an exemplary mobile terminal 10.

Referring to FIG. 2, the mobile terminal 10 includes a location information transmitter 100 and a personal broadcast service receiver 110.

The location information transmitter 100 transmits location information of the mobile terminal 10 to the personal broadcast service transmitter 20 over the mobile communication network 30. The mobile communication network 30 receives a location-based personal broadcast service request from the mobile terminal 10. The mobile communication network 30 then detects a location of the mobile terminal 10 and forwards the location information to the personal broadcast service transmitter 20. Data in the mobile communication network 30 may be used for the location information of the mobile terminal 10. The mobile terminal 10 and the mobile communication network 30 exchange data with each other so that the mobile communication network 30 may detect the location information of the mobile terminal 10.

More specifically, to detect a current location of the mobile terminal 10, the mobile communication network 30 may measure the location of the mobile terminal 10 and use a location-based service (LBS) for providing information services associated with the measured location. LBS utilizes a location detection technology (LDT) to detect the location of the mobile terminal 10 over the mobile communication network 30 and provide information services associated with the measurement.

LBS may provide high value-added services to mobile terminals which are expected to have enhanced capabilities with development of 3G communication technologies. Service providers as well as communication equipment manufacturers are taking an active part in technology development and market expansion. The mobile communication network 30 may utilize, without limitation, base station PN, BASE_ID, etc. to acquire the location information of the mobile terminal 10.

The personal broadcast service receiver 110 receives personal broadcast services from the personal broadcast service transmitter 20 based on the location information of the mobile terminal 10. In this case, the personal broadcast service receiver 110 may have a customized personal broadcast service over the mobile communication network 30. For example, the personal broadcast service receiver 110 may receive a personal broadcast service which can be received at a current location of the mobile terminal 10 using the location information of the mobile terminal 10.

Furthermore, the personal broadcast service receiver 110 may receive from the personal broadcast service transmitter 20 information about a personal broadcast list created depending on the location information of the mobile terminal 10_{:} The personal broadcast list refers to a list of personal broadcast services which a user can select. In this case, when the user selects a personal broadcast service from among the personal broadcast list, the personal broadcast service receiver 110 may request and receive the selected personal broadcast service from the personal broadcast service transmitter 20.

In addition, the personal broadcast service receiver 110 may receive from the personal broadcast service transmitter 20 a personal broadcast service on which location information of a personal broadcast content provider is reflected. Accordingly, since both the location of the personal broadcast content provider and the location of the mobile terminal 10 are detected, the mobile terminal 10 may receive a customized personal broadcast service from a personal broadcast content provider who is adjacent to the mobile terminal 10.

Furthermore, the personal broadcast service receiver 110 may receive in multicast over the mobile communication network 30 a personal broadcast service transmitted from the personal broadcast service transmitter 20. For example, although content of a personal broadcast channel selected by a user of a mobile terminal 10 receiving a personal broadcast service is being used by another user, a multicast function of the mobile communication network 30 enables a plurality of mobile terminals 10 to receive the same content from the same personal broadcast channel.

FIG. 3 is a diagram illustrating an exemplary personal broadcast service transmitter 20.

Referring to FIG. 3, the personal broadcast service transmitter 20 includes a terminal location information receiver 200 and a personal broadcast service provider 210.

The personal broadcast service transmitter 20 may be, but not limited to, a personal broadcast server which receives personal broadcast content from a personal broadcast content provider and sends it to the mobile terminal 10. Examples of the personal broadcast content provider may include public institutions or enterprises other than public broadcast entities, private enterprises or individuals. Such personal broadcast content providers may produce their own personal broadcast content, such as public relations, commercials or sports event programs, and provide them to the personal broadcast service transmitter 20.

The personal broadcast service transmitter 20 may be incorporated in or separated from the mobile communication network 30. If the personal broadcast service transmitter 20 is incorporated in the mobile communication network 30, a mobile communication provider provides personal broadcast services. If the personal broadcast service transmitter 20 is separated from the mobile communication network 30, personal broadcast providers other than the mobile communication provider, entities or individuals provide personal broadcast services.

The personal broadcast service transmitter 20 receives location information of the mobile terminal 10 and a personal broadcast service request message from the mobile communication network 30. The personal broadcast service transmitter 20 generates a personal broadcast service list for a user of the mobile terminal 10, The personal broadcast service transmitter 20 receives location information of a personal broadcast content provider and broadcast content from the personal broadcast content provider. The personal broadcast service transmitter 20 sends personal broadcast content to the mobile terminal 10.

More specifically, the terminal location information receiver 200 receives, over the mobile communication network 30, location information of the mobile terminal 10 which has requested a personal broadcast service. The personal broadcast service provider 210 provides the personal broadcast service to the mobile terminal 10 based on the location information of the mobile terminal 10 received from the terminal location information receiver 200. That is, the personal broadcast service provider 210 may provide the mobile terminal 10 with personal broadcast services which can be received at a current location of the mobile terminal 10 using the location information of the mobile terminal 10. In this case, the personal broadcast service provider 210 may generate a personal broadcast list according to the location information of the mobile terminal 10 and provide it to the mobile terminal 10. Furthermore, when the personal broadcast service is provided, location information of a personal broadcast content provider may be considered.

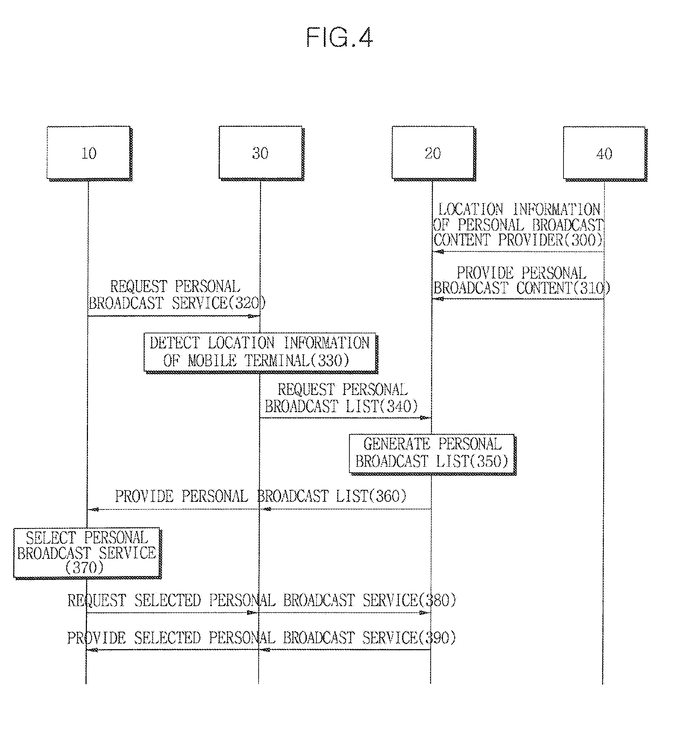

FIG. 4 is a flow chart of an exemplary personal broadcast service process.

Referring to FIG. 4, the mobile terminal 10 requests a personal broadcast service over the mobile communication network 30 (operation 320). The mobile communication network 30 detects location information of the mobile terminal 10 (operation 330). The mobile communication network 30 sends the location information of the mobile terminal 10 to the personal broadcast service transmitter 20 white requesting a personal broadcast list from the personal broadcast service transmitter 20 (operation 340).

Before receiving the personal broadcast service request from the mobile terminal 20, the personal broadcast service transmitter 20 detects location information of the personal broadcast content provider 40 (operation 300), and receives personal broadcast content from the personal broadcast content provider 40 (operation 310), The location information of the personal broadcast content provider 40 will be used in generating a personal broadcast list which can be received by the mobile terminal 10.

The personal broadcast service transmitter 20 generates a personal broadcast list using the location information of the mobile terminal 10 (operation 350). The personal broadcast service transmitter 20 provides the personal broadcast list to the mobile terminal 10 over the mobile communication network 30 (operation 360).

A user selects a personal broadcast service on the mobile terminal 10 based on the personal broadcast list (operation 370). The mobile terminal 10 requests the selected personal broadcast service from the personal broadcast service transmitter 20 over the mobile communication network 30 (operation 380) and receives the personal broadcast service from the personal broadcast service transmitter 20 (operation 390). As such, the mobile terminal 10 receives a customized personal broadcast service according to the locations of the mobile terminal 10 and the personal broadcast content provider 40.

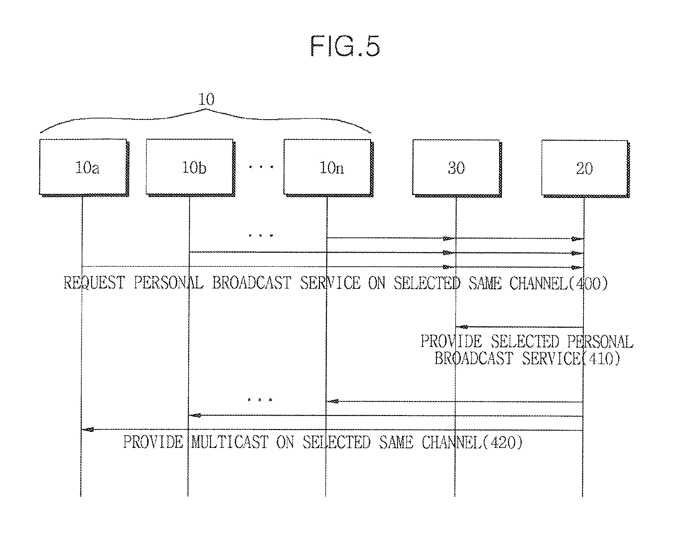

FIG. 5 is a flow chart of an exemplary personal broadcast multicast process. While FIG. 4 illustrates a personal broadcast service process where a single subscriber makes a request from a single personal broadcast channel (single personal broadcast content), FIG. 5 illustrates a personal broadcast channel multicast process where a plurality of subscribers make a request from a single personal broadcast channel.

Referring to FIG. 5, the mobile terminal 10 may receive a personal broadcast service, which is sent from the personal broadcast service transmitter 20, in multicast over the mobile communication network 30. In one example, a plurality of users of a plurality of mobile terminals 10a, 10b,..., 10n request a personal broadcast service from a personal broadcast channel (operation 400). When a user is receiving content on a personal broadcast channel, the content on the personal broadcast channel may be sent to a plurality of mobile terminals 10 using a multicast function of the mobile communication network 30. In this case, the personal broadcast service transmitter 20 sends the selected personal broadcast service over the mobile communication network 30 (operation 410). The mobile communication network 30 provides in multicast the personal broadcast service on the selected channel (operation 420). Accordingly, the same personal broadcast service may be provided to a plurality of personal broadcast receivers in real time through the multicast function of the mobile communication network 30.

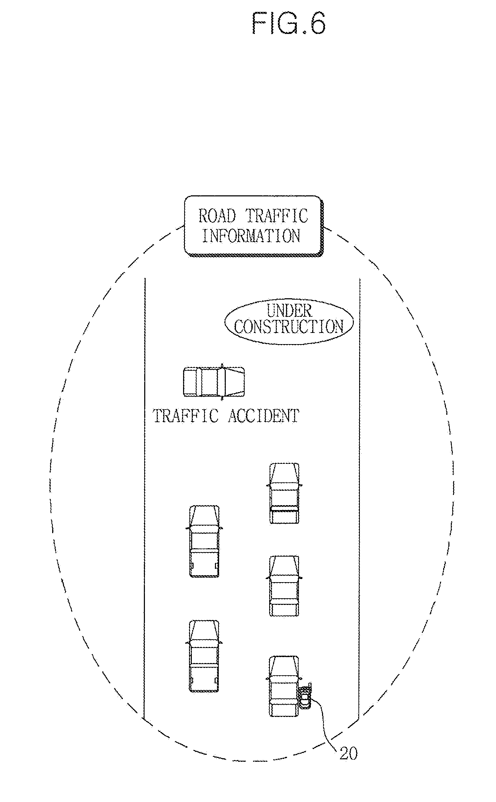

FIGS. 6 to 9 are diagrams illustrating exemplary personal broadcast services.

Examples of the personal broadcast service include road guidance information service, road traffic information service, sports event information service, shopping mall information service, public guidance information service such as public institution guidance information service, and private commercials service.

Referring to FIG. 6, an exemplary personal broadcast service may be a road traffic information service. The road traffic information service allows a mobile terminal user, as a personal broadcast service receiver, to check a traffic condition of a road congested with traffic. In this case, the user may receive a personal broadcast service on whether or not there is a traffic accident ahead, a road is under construction, etc. For example, a vehicle equipped with a mobile terminal receiving a personal broadcast service at the scene of an accident may receive a personal broadcast service on a road condition from a terminal which provides personal broadcast content of a closed-circuit television installed on the road, for example. Accordingly, the personal broadcast service receiver may make out the reason of congested traffic and make a detour to avoid the congested area by receiving a personal broadcast service on road and traffic conditions.

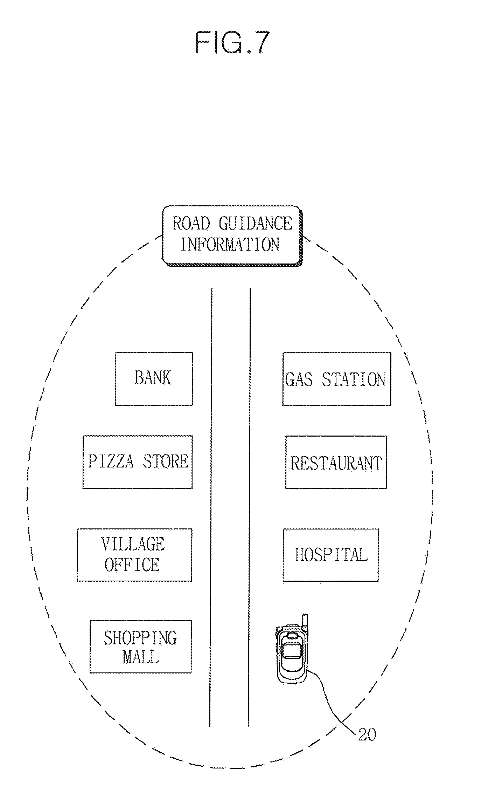

Referring to FIG. 7, an exemplary personal broadcast service may be a road guidance information service. The road guidance information service helps a personal broadcast service receiver to find a desired place by receiving a personal broadcast at his or her current location. For example, when the service receiver needs the guidance of a road, the service receiver receives a personal broadcast service which is broadcast at his or her current location, such as public facility, restaurant, shopping mall, or hospital, to obtain the road guidance information and find his or her desired place. In this case, personal broadcast service providers, such as public or private entities, may advertise their information, such as locations, business hours, or types of service, while personal broadcast service receivers may make use of such information.

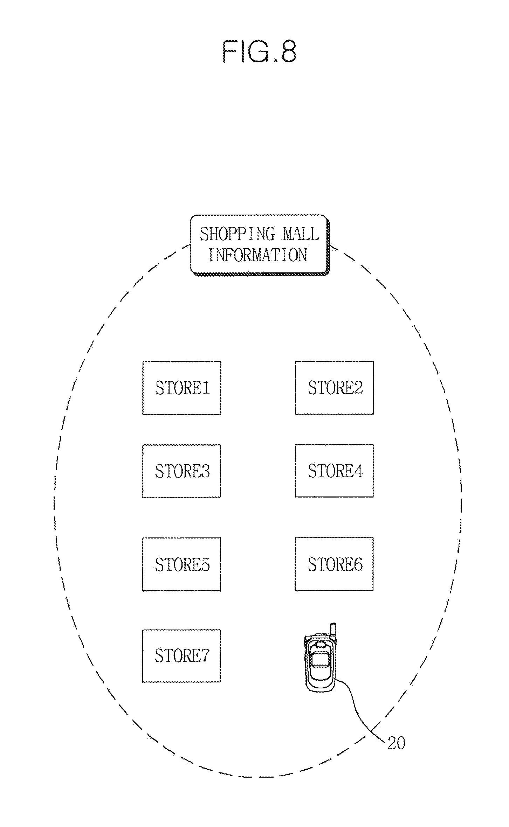

Referring to FIG. 8, an exemplary personal broadcast service may be a shopping mall information service. Also in this case, the personal broadcast service provider and receiver may benefit from the personal broadcast service. For example, stores in a wide shopping mall as shown in FIG. 8 may advertise a variety of information, such as sale items, prices, bargain sales and business hours, through their personal broadcast services. The personal broadcast service receivers may obtain shopping information from the personal broadcast service and purchase goods.

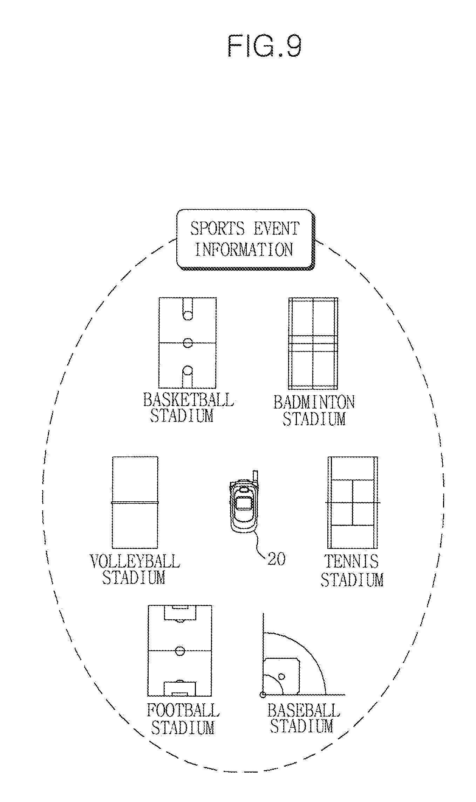

Referring to FIG. 9, an exemplary personal broadcast service may be a sports event information service. The sports event information service provides information about sport events which are being held in an area with a number of sports facilities. In this case, a personal broadcast service receiver may receive a personal broadcast channel which is broadcast at a stadium in the vicinity of the receiver, and view an ongoing sport game on the personal broadcast channel. It will be apparent to a person skilled in the art that other exemplary examples can be implemented in addition to the foregoing personal broadcast services.

As apparent from the above description, the exemplary mobile terminal, which is a personal broadcast service receiver, may receive customized location-based personal broadcast services. In other words, the personal broadcast service receiver may receive customized location-based personal broadcast services using the location information of the mobile terminal, which receives the personal broadcast services, and of the personal broadcast content provider. Furthermore, by operatively connecting a personal broadcast system, which provides personal broadcast services, with a mobile communication system, which provides mobile communication services, it is possible to extend the personal broadcast services and provide useful personal broadcast services to users.

A number of exemplary embodiments have been described above. Nevertheless, it will be understood that various modifications may be made. For example, suitable results may be achieved if the described techniques are performed in a different order and/or if components in a described system, architecture, device, or circuit are combined in a different manner and/or replaced or supplemented by other components or their equivalents. Accordingly, other implementations are within the scope of the following claims.

## Claims

1. A mobile terminal receiving a personal broadcast service, comprising:
a location information transmitter to transmit location information of the mobile terminal to a personal broadcast service transmitter transmitting the personal broadcast service over a mobile communication network; and
a personal broadcast service receiver to receive from the personal broadcast service transmitter the personal broadcast service generated based on the location information of the mobile terminal.

2. The mobile terminal of claim 1, wherein the personal broadcast service receiver receives a customized personal broadcast service, which is received at a location of the mobile terminal, using the location information of the mobile terminal.

3. The mobile terminal of claim 1, wherein the personal broadcast service receiver receives from the personal broadcast service transmitter a personal broadcast list generated depending on the location information of the mobile terminal.

4. The mobile terminal of claim 3, wherein when a user selects a personal broadcast service from the personal broadcast list, the personal broadcast service receiver requests and receives the selected personal broadcast service from the personal broadcast service transmitter.

5. The mobile terminal of claim 1, wherein the personal broadcast service receiver receives from the personal broadcast service transmitter a personal broadcast service on which location information of a personal broadcast content provider is reflected.

6. The mobile terminal of one of claims 1 to 5, wherein the personal broadcast service receiver receives in multicast over the mobile communication network a personal broadcast service which is sent from the personal broadcast service transmitter.

7. The mobile terminal of one of claims 1 to 6, wherein the mobile communication network comprises an access network to control wireless access or wireless transmission of the mobile terminal, and a core network to control the access network and manage location information of the mobile terminal.

8. The mobile terminal of one of claims 1 to 7, wherein the personal broadcast service comprises at least one of a road guidance information service, a road traffic information service, a sports event information service, a shopping mall information service, a public guidance information service or a private commercials service.

9. A personal broadcast service transmitter comprising:
a terminal location information receiver to receive, over a mobile communication network, location information of a mobile terminal which has requested a personal broadcast service; and
a personal broadcast service provider to generate a personal broadcast service based on the location information of the mobile terminal and provide the personal broadcast service to the mobile terminal

10. The personal broadcast service transmitter of claim 9, wherein the personal broadcast service transmitter is a personal broadcast server which receives personal broadcast content from a personal broadcast content provider and provides the personal broadcast content to the mobile terminal over the mobile communication network.

11. The personal broadcast service transmitter of claim 9, wherein the personal broadcast service provider reflects location information of a personal broadcast content provider when providing the personal broadcast service.

12. The personal broadcast service transmitter of claim 9, wherein the personal broadcast service provider generates a personal broadcast list according to the location information of the mobile terminal and provide the personal broadcast list to the mobile terminal.

13. The personal broadcast service transmitter of claim 9, wherein the personal broadcast service transmitter is incorporated in or separated from the mobile communication network.
